# EUROPEAN PATENT SPECIFICATION

(11) **EP 2 449 325 B1**
(45) Date of publication and mention of the grant of the patent: **23.08.2017**
(21) Application number: 10726536.5
(22) Date of filing: 01.07.2010
(51) Int. Cl.: F25J 1/02, G05B 15/02, G05B 13/04

(54) **METHOD AND APPARATUS FOR PRODUCING A COOLED HYDROCARBON STREAM**
VERFAHREN UND VORRICHTUNG ZUR ERZEUGUNG EINES GEKÜHLTEN KOHLENWASSERSTOFFSTROMS
PROCÉDÉ ET APPAREIL DE PRODUCTION D'UN FLUX D'HYDROCARBURE REFROIDI

(30) Priority: 03.07.2009 EP 09164547
(43) Date of publication of application: 09.05.2012
(73) Proprietor: Shell Internationale Research Maatschappij B.V., 2596 HR Den Haag (NL)
(72) Inventor: CHANTANT, François, NL-2596 HR The Hague (NL); LONGE, Tolulope Bilikisu, NL-1031 HW Amsterdam (NL)
(74) Representative: Matthezing, Robert Maarten
(86) International application number: PCT/EP2010/059341
(87) International publication number: WO 2011/000900

(56) References cited:
- EP-A1- 1 921 406
- WO-A2-2008/019999
- WO-A2-2009/063092
- WO-A2-2009/098278
- US-A- 3 742 721
- US-A- 5 791 160
- US-A1- 2004 255 615
- US-B1- 6 370 910

## Description

The present invention provides a method of producing a cooled hydrocarbon stream, comprising cooling of a hydrocarbon stream, and an apparatus for producing a cooled hydrocarbon stream from a hydrocarbon stream, comprising the features of the preamble of claims 1 and 15 respectively. Such a method respectively apparatus is known from US-A-6 370 910. A common hydrocarbon stream to be cooled is a natural gas stream. Such a natural gas stream may be cooled to the extent that it is liquefied, in which case it is typically referred to as liquefied natural gas (LNG).

It is desirable to liquefy natural gas for a number of reasons. As an example, natural gas can be stored and transported over long distances more readily as a liquid than in gaseous form, because it occupies a smaller volume and does not need to be stored at high pressures. Such liquefied natural gas can be stored at atmospheric pressure if maintained at cryogenic temperatures, such as at -160 °C or below.

US Patent No. 6,370,910 discloses a method of liquefying a stream enriched in methane. A natural gas stream is passed to a scrub column in which heavier hydrocarbons are removed to provide a gaseous overhead stream. The gaseous overhead stream from the scrub column is partly condensed in an auxiliary (pre-cooling) heat exchanger. A condensate stream is then removed from the partly condensed overhead gaseous stream to provide a stream enriched in methane. The stream enriched in methane is then liquefied in a tube arranged in a main heat exchanger by indirect heat exchange with a multicomponent refrigerant evaporating at low pressure in the shell side of the main heat exchanger.

The multi-component refrigerant can be withdrawn from the shell side of the main heat exchanger and compressed. The compressed multi-component refrigerant can then be partly condensed at elevated refrigerant pressure in a tube arranged in an auxiliary (pre-cooling) heat exchanger by indirect heat exchange with an auxiliary (pre-cooling) multi-component refrigerant evaporating at low pressure in the shell side of the auxiliary heat exchanger. The partly condensed multi-component refrigerant can then be returned to the main heat exchanger.

US Patent No. 6,370,910 discloses an embodiment wherein the step of partly condensing the compressed multi-component refrigerant comprises cooling it at elevated pressure in a tube arranged in a first auxiliary heat exchanger by indirect heat exchanger with an auxiliary multi-component refrigerant evaporating at intermediate pressure in the shell side of the first auxiliary heat exchanger. The multi-component refrigerant is then further cooled in a tube arranged in a second auxiliary heat exchanger by indirect heat exchange with an auxiliary multicomponent refrigerant evaporating at a low pressure in the shell side of the second auxiliary heat exchanger.

One problem associated with the liquefaction process of US Patent No. 6,370,910 is how this may be optimally controlled, particularly with regard to a line-up providing two auxiliary heat exchangers operating at different pressures of auxiliary multi-component refrigerant. There is a whole variety of process variables which may be selected or manipulated to control the cooling processes in the auxiliary heat exchangers.

The present invention provides a method of producing a cooled hydrocarbon stream comprising cooling of a hydrocarbon stream. The method comprises at least the steps of:
(a) cooling a first stream and a compressed first refrigerant stream in a first refrigerant circuit comprising a first compressor and a first mixed refrigerant, against a first expanded first refrigerant stream in a first heat exchanger at a first pressure level, to provide a cooled first stream, a first cooled first refrigerant stream and a first warmed first refrigerant stream;
(b) expanding a first portion of the first cooled first refrigerant stream in a first expansion device to provide the first expanded first refrigerant stream;
(c) cooling one or more second streams, and a second portion of the first cooled first refrigerant stream against a second expanded first refrigerant stream in a second heat exchanger to provide one or more cooled second streams, a further cooled first refrigerant stream, and a second warmed first refrigerant stream, wherein the one or more second streams comprise at least the cooled first stream or a dependent stream derived therefrom, whereby the hydrocarbon stream is comprised in the one or more second streams in order to provide at least the cooled hydrocarbon stream;
(d) expanding at least a first portion of the further cooled first refrigerant stream in a second expansion device to provide the second expanded first refrigerant stream, said second expanded first refrigerant stream being at a lower pressure than said first expanded first refrigerant stream, and
(e) compressing gaseous fractions of the first warmed first refrigerant stream and the second warmed first refrigerant stream in a first compressor and subsequently cooling the compressed stream from the first compressor, to provide the compressed first refrigerant stream; the method further comprising controlling the steps (a) to (e) using an advanced process controller based on model predictive control to determine simultaneous control actions for a set of manipulated variables in order to optimise at least one of a set of parameters to be optimized, whilst controlling at least one of a set of controlled variables, wherein the set of manipulated variables comprises:
   - the composition of the first mixed refrigerant inventory in the first refrigerant circuit,
   - the setting of the first expansion device, and
   - the setting of the second expansion device,
   wherein the set of controlled variables comprises:
   - the temperature of at least one of the one or more cooled second streams,
   - the temperature difference between the first warmed first refrigerant stream and at least one of (i) the compressed first refrigerant stream and (ii) the first stream,
   - the temperature difference between the second warmed first refrigerant stream and at least one of (i) the second portion of the first cooled first refrigerant stream and (ii) one of the one or more second streams in the form of the cooled first stream and/or the dependent stream derived from the cooled first stream,
   - at least one of (i) the temperature difference between the first cooled first refrigerant stream and the first expanded first refrigerant stream and (ii) the temperature difference between the further cooled first refrigerant stream and the second expanded first refrigerant stream, and
   - the power being consumed by the first compressor;
   and wherein the set of parameters to be optimised comprises the production rate of the cooled hydrocarbon stream and/or the cooling efficiency of the first refrigerant circuit, said cooling efficiency reflecting the power consumed in the first compressor in relation to the mass of cooled hydrocarbon stream produced over time.
In a further aspect, the invention provides an apparatus for producing a cooled hydrocarbon stream from a hydrocarbon stream, comprising:
- a first refrigerant circuit comprising an inventory of a first mixed refrigerant; a first expansion device; a second expansion device; a first compressor and one or more first coolers to cool a compressed stream from the first compressor thereby to provide a compressed first refrigerant stream;
- a first heat exchanger arranged to cool a first stream and the compressed first refrigerant stream, against a first expanded first refrigerant stream at a first pressure level, to provide a cooled first stream, a first cooled first refrigerant stream and a first warmed first refrigerant stream, the first expansion device being arranged to receive a first portion of the first cooled first refrigerant stream and to provide the first expanded first refrigerant stream;
- a second heat exchanger arranged to cool one or more second streams and a second portion of the first cooled first refrigerant stream, against a second expanded first refrigerant stream to provide one or more cooled second streams, a further cooled first refrigerant stream and a second warmed first refrigerant stream, the second expansion device being arranged to receive at least a first portion of the further cooled first refrigerant stream to provide the second expanded first refrigerant stream, said second expanded first refrigerant stream being at a lower pressure than said first expanded first refrigerant stream, said one or more second streams comprising at least the cooled first stream or a dependent stream derived therefrom, whereby the hydrocarbon stream is comprised in the one or more second streams in order to provide at least the cooled hydrocarbon stream;

- the first compressor being arranged to compress gaseous fractions of the first warmed first refrigerant stream and the second warmed first refrigerant stream;
- an advanced process controller comprising computer-executable coded based on model predictive control to determine simultaneous control actions for a set of manipulated variables in order to optimise at least one of a set of parameters to be optimized, whilst controlling at least one of a set of controlled variables, wherein the set of manipulated variables comprises:
- the composition of the first mixed refrigerant inventory in the first refrigerant circuit,
- the setting of the first expansion device, and
- the setting of the second expansion device,
wherein the set of controlled variables comprises:
- the temperature of at least one of the one or more cooled second streams,
- the temperature difference between the first warmed first refrigerant stream and at least one of (i) the compressed first refrigerant stream and (ii) the first stream,
- the temperature difference between the second warmed first refrigerant stream and at least one of (i) the second portion of the first cooled first refrigerant stream and (ii) one of the one or more second streams in the form of the cooled first stream and/or the dependent stream derived from the cooled first stream,
- at least one of (i) the temperature difference between the first cooled first refrigerant stream and the first expanded first refrigerant stream and (ii) the temperature difference between the further cooled first refrigerant stream and the second expanded first refrigerant stream; and
- the power being consumed by the first compressor;
and wherein the set of parameters to be optimised comprises the production rate of the cooled hydrocarbon stream and/or the cooling efficiency of the first refrigerant circuit. In the present context, the cooling efficiency reflects the power consumed in the first compressor in relation to the mass of cooled hydrocarbon stream produced over time.

Embodiments of the present invention will now be described by way of example only and with reference to the accompanying non-limited drawings in which:
Figure 1 is a diagrammatic scheme of a method of and apparatus for cooling a hydrocarbon stream according to a first embodiment; and
Figure 2 is a diagrammatic scheme of a method of and apparatus for cooling and liquefying a hydrocarbon stream according to a second embodiment.

For the purpose of this description, a single reference number will be assigned to a line as well as a stream carried in that line. The same reference numbers used in different Figures represent identical lines and streams.

Whenever reference is made to "low pressure" ; "intermediate pressure"; and "high pressure"; this is meant to refer to relative pressure levels relative to the other pressure levels in the first refrigerant circuit, in this order.

As used herein, the term "setting" is intended to represent a measure of the opening of a device, such as a valve. The term "controlling a controlled variable" means keeping the controlled variable at a pre-determined value (set point) or within a pre-determined range (set range). As used herein, the term "optimizing a parameter" is intended to refer to maximizing or minimizing the parameter and to maintaining the parameter at a predetermined value.

The methods and apparatuses disclosed herein cool a hydrocarbon steam, preferably as part of a liquefaction process for the hydrocarbon. The cooling process is controlled using an advanced process controller based on model predictive control, to optimise the production rate of the cooled hydrocarbon stream and/or the efficiency of the refrigeration process. The settting of the expansion devices are manipulated variables.

Manipulating the setting of the expansion devices delivering the first mixed refrigerant to the first and second heat exchangers allows the optimisation of the cooling method. By altering the setting of the expansion devices, the change in pressure of the first mixed refrigerant across the expansion devices can be manipulated. This in turn adjusts the change in temperature of the first refrigerant across the expansion devices, allowing the temperature at which the expanded first refrigerant streams cool the first and second streams to be manipulated.

Model predictive control or model based predictive control in itself is a known technique, as disclosed, for example, in Perry's Chemical Engineers' Handbook, 7th Edition, pages 8-25 to 8-27. In US Patent No. 6,272,882 it has been applied in a process of liquefying a gaseous, methane-rich feed to obtain a liquefied product and mass flow rates of refrigerant fractions and stream to be cooled were utilized as manipulated variables. The temperature difference at the warm end and midpoint of the main heat exchanger as controlled variables in order to optimise the production of a liquefied product.

US Patent No. 6,272,882 is primarily concerned with the operation of the main heat exchanger, rather than the pre-cooling heat exchanger(s). Application of the advanced process control principles disclosed in US Patent No. 6,272,882, which utilises different compositions and flow rates of light and heavy mixed refrigerant fractions at a single pressure level is unsuitable for the control of a mixed refrigerant at different pressure levels as is the case in the present invention.

In particular, US Patent No. 6,272,882 uses as the manipulated variables the mass flow rates of light and heavy fractions of the mixed refrigerant. Applying this to the cooling of the first and second streams in the present case would have lead to the manipulation of the mass flow of the first mixed refrigerant. It has been found that manipulation of the mass flow of the first mixed refrigerant does not allow an acceptable optimisation of the production of the cooled hydrocarbon stream. The method of the present invention utilizes control of temperature differential across at least one of the first and second expansion devices, rather than mass flow control of the refrigerant streams.

An advantage of the present invention is the ease with which the cooling curve of the first mixed refrigerant can be matched with the cooling curves of the first and second streams. US Patent No. 6,272,882 teaches the use of two mixed refrigerant compositions, namely a light gaseous and a heavy liquid fraction, which are controlled by the separation of a partly condensed refrigerant stream in a separation vessel. It is difficult and time consuming to vary the overall composition of such a mixed refrigerant in order to modify the individual compositions of the light and heavy refrigerant fractions.

In contrast, the present invention allows the cooling curve of the first mixed refrigerant to be changed by controlling the temperature differences of the first mixed refrigerant. The cooling curve of a single mixed refrigerant composition can be optimised to closely match those of the first and second streams.

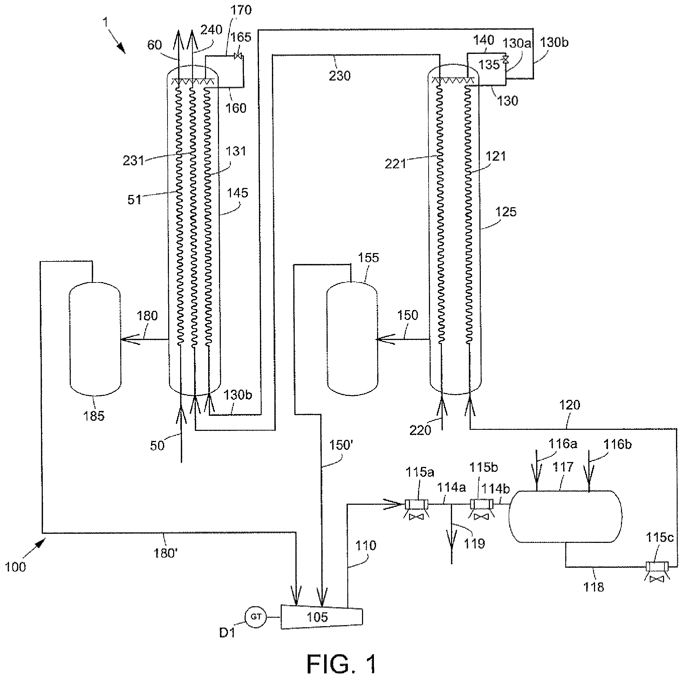

Figure 1 shows a first embodiment an apparatus 1 for carrying out the method of cooling a hydrocarbon stream 50 to provide a cooled second stream in the form of a cooled hydrocarbon stream 60. The apparatus comprises a first refrigerant circuit 100 comprising an inventory of a first mixed refrigerant. The first refrigerant circuit 100 comprises a first compressor 105 and one or more first coolers 115a to 115c, to cool a compressed effluent stream 110 from the first compressor 105. The effluent stream from the last one of the first coolers (here: 115c) is a compressed first refrigerant stream 120.

The apparatus of Figure 1 further comprises a first heat exchanger 125. The first heat exchanger 125 is arranged to cool a first stream (e.g. in the form of second refrigerant stream 220) as well as the compressed first refrigerant stream 120, each stream in a tube side 221 respectively 121. The cooling medium is formed by a first expanded first refrigerant stream 140 in the shell side of the first heat exchanger 125. At the cold end of the first heat exchanger 125 there are outlets to provide at least one cooled first stream, e.g. in the form of cooled second refrigerant stream 230, and a first cooled first refrigerant stream 130. At or near the warm end there is an outlet for a first warmed first refrigerant stream 150. A first expansion device 135 is arranged to receive a first portion 130a of the first cooled first refrigerant stream 130 and to provide the first expanded first refrigerant stream 140 to the shell side of the firt heat exchanger 125.

The apparatus further comprises a second heat exchanger 145 arranged to cool the cooled first stream, which may be the cooled second refrigerant stream 230, the hydrocarbon stream 50 and a second portion 130b of the first cooled first refrigerant stream 130, each stream in a tube side 231 respectively 51 respectively 131. The cooling medium is formed by a second expanded first refrigerant stream 170 in the shell side of the second heat exchanger 145. At the cold end of the second heat exchanger 145 there are outlets to provide at least a cooled hydrocarbon stream 60, a further cooled first stream (for instance in the form of further cooled second main refrigerant stream 240), and a further cooled first refrigerant stream 160. At or near the warm end there is an outlet for a second warmed first refrigerant stream 180. A second expansion device 165 is arranged to receive at least a first portion of the further cooled first refrigerant stream 160 and to provide the second expanded first refrigerant stream 170 to the shell side of the second heat exchanger 145.

The compressor 105 is arranged to compress gaseous fractions of the first warmed first refrigerant stream 150 and the second warmed first refrigerant stream 180. It has a low pressure suction inlet arranged to receive the gaseous fraction 180' of the second warmed first refrigerant stream 180 and an intermediate pressure suction inlet arranged to receive the gaseous fraction 150' of the first warmed first refrigerant stream 150. Alternatively, a plurality of compressors may be used.

The hydrocarbon stream 50 is a first of one or more second streams passed to one or more second heat exchangers 145. The hydrocarbon stream 50 is supplied to a second heat exchanger hydrocarbon stream tube 51 in the second heat exchanger 145, where it is cooled by indirectly heat exchanging with the first mixed refrigerant evaporating a low pressure in the shell side of the second heat exchanger 145. It is preferred that the hydrocarbon stream 50 is partly condensed in the second heat exchanger 145.

The cooled, preferably partly condensed, hydrocarbon stream exits the second heat exchanger 145 as a cooled hydrocarbon stream 60, which is a cooled second stream. The operation of the first mixed refrigerant, which may be a pre-cooling refrigerant in a pre-cooling refrigerant circuit, is discussed in greater detail below.

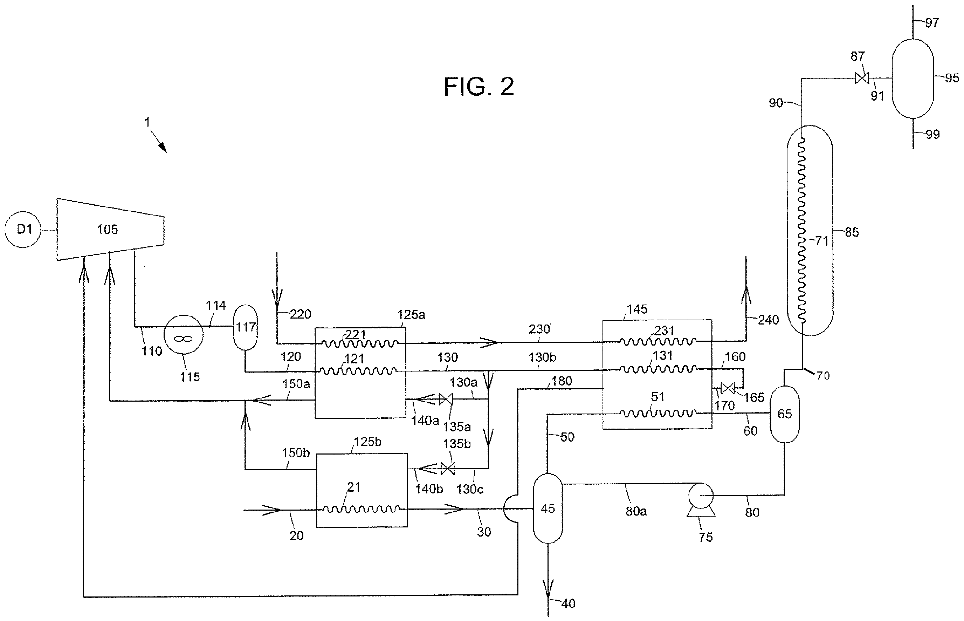

The line-up of Figure 1 further discloses the cooling of a further second stream, e.g. in the form of cooled second refrigerant stream 230, and one or more first streams (e.g. comprising second refrigerant stream 220). The method disclosed herein is particularly advantageous for the cooling of a second mixed refrigerant, which can be used in the further cooling and preferably liquefaction of cooled hydrocarbon stream 60 in a second cooling stage (not shown). Such a second cooling stage is described in more detail in relation to the embodiment of Figure 2.

The second mixed refrigerant is preferably cooled, and more preferably partially condensed in two stages. The second mixed refrigerant can be passed through one or both of the first and second heat exchangers 125, 145 in the first cooling stage.

The first mixed refrigerant can be passed to first heat exchanger 125 as a first stream in the form of second refrigerant stream 220. In the second refrigerant tube 221 of the first heat exchanger 125, the second second mixed refrigerant is cooled at elevated pressure by indirect heat exchange with the first mixed refrigerant evaporating at intermediate pressure in the shell side of the first heat exchanger 125. Cooled second mixed refrigerant exits the first heat exchanger 125 as cooled first stream in the form of a cooled second refrigerant stream 230.

Cooled second refrigerant stream 230 may be passed to second heat exchanger 145 as second stream 230. In the second second refrigerant tube 231 of the second heat exchanger 145, the cooled second mixed refrigerant stream is further cooled, and preferably partly condensed, at elevated pressure by indirect heat exchange with first refrigerant evaporating a low pressure in the shell side of the second heat exchanger 145. The further cooled second refrigerant exits the second heat exchanger 145 as a (second) cooled second stream which may be in the form of a further cooled second main refrigerant stream 240. The further cooled second refrigerant stream 240 may then be passed to a main heat exchanger (not shown) to provide cooling.

Turning to the first refrigerant circuit, the first mixed refrigerant evaporated at intermediate pressure in the shell side of the first heat exchanger 125 is removed therefrom as first warmed first refrigerant stream 150 at approximately the intermediate pressure level. The first warmed first refrigerant stream 150 may be passed to a first knock out drum 155 to remove any liquid phase, prior to passing the gaseous components of the first warmed first refrigerant stream 150 to first compressor 105 as gaseous first warmed first refrigerant stream 150'.

The first compressor 105 may be a two-stage compressor. The first compressor may be provided in the form of one or more first compressors (e.g. in serial configuration where one of the one or more first compressors perform one or more stages of compression and a subsequent one of the one or more first compressors perform one or more subsequent stages of compression; or in parallel arrangement where each of the parallel arranged compressors compress a portion of the total gaseous first warmed first refrigerant stream 150') together acting as first compressor. First compressor 105 may be driven by a first driver D1, such as a gas turbine, a steam turbine, an electric motor or combinations thereof. In the second stage of the first compressor 105, the mixed gaseous first warmed first refrigerant stream 150' is compressed to elevated pressure to provide compressed stream 110.

Heat of compression together with at least a part of the heat absorbed from the first and second streams (for which can be used any of 120, 50, 130b, 230) and the compressed first refrigerant stream 120 is removed using one or more first cooling devices 115, such as ambient air coolers 115a, 115b to provide first and second cooled compressed first refrigerant streams 114a, 114b respectively. The majority of the heat present in the compressed stream 110 is absorbed from the second refrigerant stream 220 as a first stream and the cooled second refrigerant stream 230 as a second stream.

(Second) cooled compressed first refrigerant stream 114b is shown being passed to a first refrigerant accumulator 117. First refrigerant accumulator 117 may also be fed by one or more first refrigerant component make-up streams 116. Figure 1 shows first and second first refrigerant component make-up streams 116a, 116b which may replenish components that have been removed from or leaked from the first refrigerant inventory in the first refrigerant circuit 100. Selective addition of first and second components may alter the composition of the first mixed refrigerant. In order to maintain a steady mass balance of first mixed refrigerant in the first refrigerant circuit, a first refrigerant drain stream may be provided. As an example in the embodiment shown in Figure 1 the first refrigerant can be removed from the (first) cooled compressed first refrigerant stream 114a via first refrigerant drain stream 119. This is preferred if it is desired to remove both light and heavy components from the inventory of the first mixed refrigerant in the first refrigerant circuit 100.

In an alternative embodiment (not shown in Figure 1), one or more first refrigerant drain streams may be removed from first refrigerant accumulator 117. If the first refrigerant drain stream is overhead from accumulator 117, light, vaporous components of the first mixed refrigerant may be preferentially removed. If the first refrigerant drain stream is at or near the bottom of accumulator 117, heavy, liquid components of the first mixed refrigerant may be preferentially removed. In this way, it is possible to adjust the composition of the first mixed refrigerant.

The first mixed refrigerant can be drawn from first refrigerant accumulator 117 as first refrigerant feed stream 118, which may be cooled in cooling device 115c, such as an ambient cooler, to provide the compressed first refrigerant stream 120.

The compressed first refrigerant stream 120 is passed to first heat exchanger 125 as a (second) first stream. The compressed first refrigerant stream 120 is passed through a (second) first stream tube 121 in the first heat exchanger 125, in which it is cooled to provide a first cooled first refrigerant stream 130.

The first cooled first refrigerant stream 130 is divided into first portion 130a and second portion 130b, for instance using a splitter such as a T-piece, maintaining the composition of the first and second portions the same as the composition of the first cooled first refrigerant stream 130. The first portion 130a of the first cooled first refrigerant stream 130 is passed through the first expansion device 135, e.g. in the form of a Joule-Thomson valve, to the cold end of the shell side of the first heat exchanger 125, in which it is allowed to evaporate at an intermediate pressure level. The evaporating first refrigerant extracts heat from the two first streams (compressed first refrigerant stream 120 and second refrigerant stream 220) flowing through the tubes 121 and 221.

The remainder of the first cooled first refrigerant stream 130, i.e. second portion 130b of the first cooled first refrigerant stream 130 is passed to the second heat exchanger 145. The second portion 130b is passed to a second first refrigerant tube 131 arranged in the second heat exchanger 145, in which it is cooled to provide a further cooled first refrigerant stream 160.

The further cooled first refrigerant stream 160 is passed to the second expansion device 165, such as a Joule-Thomson valve, to provide second expanded first refrigerant stream 170. The second expanded first refrigerant stream 170 is at a lower pressure than the first expanded first refrigerant stream 140. The second expanded first refrigerant stream 170 is passed to the cold end of the shell side of the second heat exchanger 145, in which it is allowed to evaporate at low pressure. The evaporating first refrigerant extracts heat from the second streams (e.g. hydrocarbon stream 50 and/or cooled second refrigerant stream 230) flowing through the tubes 51 and 231, and from the second portion 130b of the first cooled first refrigerant stream 130 in tube 131.

Evaporated first mixed refrigerant at low refrigerant pressure is removed from the shell side of the second heat exchanger 145 as second warmed first refrigerant stream 180. The second warmed first refrigerant stream 180 may be passed to second knock out drum 185 to remove any liquid phase prior to passing the gaswous components of the second warmed first refrigerant stream 180 to first compressor 105 in the form of gaseous second warmed first refrigerant stream 180'. In the two-stage compressor 105, the first mixed refrigerant is compressed to elevated pressure to provide compressed stream 110.

It will be apparent that the one or more first coolers 115 may be water coolers, rather than air coolers and, if required, can be supplemented by heat exchangers in which a further coolant is used. The first and/or second expansion devices 135, 165 can be replaced or supplemented by expansion turbines. The first and second heat exchangers 125, resp. 145, can be independently selected from spool wound or plate-fin heat exchangers, although the above description has been made with specific reference to spool wound type heat exchangers.

In an alternative embodiment, the hydrocarbon stream may be cooled in both first and second heat exchangers. Figure 2, for instance, discloses a line-up comprising two, i.e. first and second, first heat exchangers 125a, 125b, both operating at intermediate pressure, and one second heat exchanger 145 operating at low pressure.

A hydrocarbon feed stream 20 is provided and passed to the second first heat exchanger 125b, where it is cooled. The hydrocarbon feed stream 20 has preferably been pre-treated to remove undesirable components such as acid gases, as will be discussed further below. In a preferred embodiment, the second first heat exchanger 125b can be used to knock out any (remaining) H₂O present in the hydrocarbon feed stream 20.

The hydrocarbon feed stream 20 may be present in a first heat exchanger hydrocarbon stream tube 21, and cooled against the first mixed refrigerant in the shell side of the second first heat exchanger 125b an intermediate pressure level. The second first heat exchanger 125b can be a kettle heat exchanger, a spoolwound or a fin plate type heat exchanger as desired. The first mixed refrigerant is allowed to evaporate as it cools the hydrocarbon feed stream 20, to provide a second first warmed first refrigerant stream 150b, and a cooled hydrocarbon feed stream 30 as a cooled first stream.

The second first warmed first refrigerant stream 150b is provided by a second first expanded first refrigerant stream 140b, by passing a third portion 130c of the first cooled first refrigerant stream 130 through a (second) first expansion device 135b, such as a Joule-Thomson valve or turbine expander.

The first cooled first refrigerant stream 130 is provided as a first cooled stream from a different heat exchanger, in this case first first heat exchanger 125a, which may be a coil wound heat exchanger or fin plate type heat exchanger.

The first first heat exchanger 125a cools one first stream (in the form of a second refrigerant stream 220) as well as the compressed first refrigerant stream 120, in a similar manner to the embodiment of Figure 1.

Thus, in the line-up shown in Figure 2, two first streams are provided, the hydrocarbon feed stream 20 and the second refrigerant stream 220, and are cooled in separate first heat exchangers 125a, 125b.

In this case, after cooling, a first first warmed first refrigerant stream 150a is provided from the shell side of the first first heat exchanger 125a. This can be combined with the (second) first warmed first refrigerant stream 150b from the second first heat exchanger, and passed to the intermediate pressure stage suction inlet of the first compressor 105.

The first compressor 105 provides a compressed stream 110, which can be passed to one or more first coolers 115, such as ambient air or water coolers which remove heat of compression together with at least a part of the heat absorbed form the first and second streams (e.g. streams represented by 120, 50, 130b, 230) and the self cooling of the first mixed refrigerant. The first coolers 115 provide a cooled first compressed refrigerant stream 114 which can be passed to first accumulator 117. The composition of the first mixed refrigerant inventory can be adjusted in the first accumulator 117 in a similar manner to the embodiment of Figure 1. The first accumulator 117 provides the compressed first refrigerant stream 120 to the first first heat exchanger 125a.

Returning to the cooled hydrocarbon feed stream 30 provided by the second first refrigerant heat exchanger 125b, this may be passed to a natural gas liquids (NGL) recovery column 45, such as a fractionation column or scrub column, e.g. in the form of a demethanizer, which provides a liquid bottoms stream such as a natural gas liquids stream 40 from at or near the bottom of the column, and an overhead gaseous stream, which is the hydrocarbon stream 50.

The hydrocarbon stream 50 is cooled in the second heat exchanger 145 as a second stream, together with the cooled second refrigerant stream 230 as a further second stream, and the second portion 130b of the first cooled first refrigerant stream 130 in a similar manner to the embodiment of Figure 1.

The cooled hydrocarbon stream 60, which is a cooled second stream provided by the second heat exchanger 145, can be passed to a first separator 65. First separator 65 provides a fraction of the cooled hydrocarbon stream 60 in the form of methane rich stream 70 overhead and a methane-depleted bottoms stream 80. The methane-depleted bottoms stream 80 can be passed to the NGL recovery column 45 as a reflux stream. The methane-depleted bottoms stream 80 can be sent first to a reflux knock-out vessel (not shown) to remove the gaseous fraction. The liquid portion of the methane-depleted bottoms stream can then be pressurised by reflux stream pump 75, to provide (pressurised) methane-depleted bottoms stream 80a which can be fed to NGL recovery column 45 at or slightly above the column operating pressure.

The methane depleted bottoms stream 80 can be returned to the upper part of fractionating column 45. By cooling the cooled hydrocarbon stream 50 in the second heat exchanger 145 prior to separation in the first separator 65, the reflux stream can be provided at a lower temperature compared to a line-up where this pre-cooling is not carried out. The temperature of this reflux determines the upper limit of the temperature of the cooled hydrocarbon stream 60 supplied to the NGL recovery column 45. This allows the provision of a more efficient process, because the methane rich stream 70 withdrawn from the top of NGL recovery column 45 can be cooled, and preferably partly condensed, at a much lower temperature. As a result the temperature at the cold end of the second heat exchanger 145 can be much lower. Thus the temperature to which the first mixed refrigerant is cooled is much lower and this results in a lower circulation rate of the refrigerant.

The methane rich stream 70 can then be passed to one or more main heat exchangers 85, in which it can be cooled and at least partially, preferably fully, liquefied in a main heat exchanger methane rich stream tube 71, against the second refrigerant in the shell side of the main heat exchanger 85. The operation of the second refrigerant, which can be a second mixed refrigerant in a second refrigerant circuit, is known to those skilled in the art. An example of the operation of the second refrigerant can be found in US Patent No. 6,370,910.

The main heat exchanger 85 may be a main cryogenic heat exchanger. The main heat exchanger 85 provides an at least partially, preferably fully, liquefied stream in the form of partially, preferably fully, liquefied hydrocarbon stream 90.

The pressure of the at least partially, preferably fully, liquefied hydrocarbon stream 90 can be reduced in an end flash expansion device 87, such as a Joule-Thomson valve and/or an expander, to provide an expanded hydrocarbon stream 91.

The expanded hydrocarbon stream 91 can be passed to an end flash separation vessel 95, to provide an end flash stream 97 and a liquefied hydrocarbon product stream 99.

In a preferred embodiment, when the hydrocarbon feed stream 20 is a natural gas stream, the liquefied hydrocarbon product stream 99 will be an LNG stream.

The methods and apparatuses of cooling described herein are controlled using an advanced process controller. The model used in the controller is based upon predictive control to determine simultaneously control actions for a set of manipulated variables in order to optimise at least one of a set of parameters to be optimized whilst controlling at least one or a set of controlled variables.

The set of manipulated variables comprises:
- the composition of the inventory of the first mixed refrigerant in the first refrigerant circuit 100,
- the setting of the first expansion device 135, and
- the setting of the second expansion device 165.

Of the first and second expansion devices 135, 165, the advanced process controller may advantageously give more weight to the device which has the lowest pressure change across it, such that it provides the lowest temperature reduction of the first mixed refrigerant.

The setting of the first and second expansion devices 135, 165 can be changed by an actuator operated by a control signal from the advanced process controller. Such a controller may also instruct actuators on one or more of the first drain stream and one or more first refrigerant component make-up streams, via a control signal, to adjust the composition of the first mixed refrigerant inventory in the first refrigerant circuit 100.

As discussed above, any manipulation of the composition of the first mixed refrigerant inventory can be carried out via first refrigerant accumulator 117. However, it is important to note that, although the composition of the first mixed refrigerant inventory in the first refrigerant circuit 100 can be varied, the composition of the first mixed refrigerant in the compressed first refrigerant stream 120 and one or preferably both of the first warmed first refrigerant stream 150 and the second warmed first refrigerant stream 180 are identical. Preferably, the composition of the first refrigerant stream passing through the first expansion device 135 is identical to the composition of the first refrigerant stream passing through the second expansion device 165.

The set of controlled variables comprises one or more of the group:
- the temperature of at least one of the one or more cooled second streams (e.g. in the form of cooled hydrocarbon stream 60 and/or further cooled second main refrigerant stream 240), preferably the temperature of the cooled hydrocarbon stream 60,
- the temperature difference between the first warmed first refrigerant stream 150 and at least one of (i) the compressed first refrigerant stream 120 and (ii) the first stream (e.g. in the form of the hydrocarbon feed stream 20 and/or second refrigerant stream 220),
- the temperature difference between the second warmed first refrigerant stream 180 and at least one of (i) the second portion 130b of the first cooled first refrigerant stream 130 and (ii) one of the one or more second streams (e.g. in the form of any of 30,50,230) in the form of the cooled first stream (cooled hydrocarbon feed stream 30 and/or cooled second refrigerant stream 230) and/or a stream derived from the cooled first stream 30 which will be referred to as "dependent stream",
- at least one of (i) the temperature difference between the first cooled first refrigerant stream 130 and the first expanded first refrigerant stream 140 and (ii) the temperature difference between the further cooled first refrigerant stream 160 and the second expanded first refrigerant stream 170, and
- the power consumed by the one or more first compressors 105.

The second and third controlled variables listed above seek to define the change in temperature between the warmed first refrigerant exiting the first or second heat exchanger and at least one of the streams entering the warm end of that exchanger.

With regard to the second controlled variable listed above, the difference in temperature between the first warmed first refrigerant stream 150 and the temperature of at least one of the streams at the warm end of the first heat exchanger 125 is determined. Said stream at the warm end of the first heat exchanger 125 can be selected from the group consisting of the first stream and the compressed first refrigerant stream 120. The first stream may be preferably selected from the group consisting of the hydrocarbon feed stream 20 (as discussed in relation to Figure 2) and the second refrigerant stream 220 in a second refrigerant circuit (not shown). It is preferred that the combination of streams giving rise to the lowest temperature difference is given relatively more weight as controlled variable.

With regard to the third controlled variable listed above, the difference in temperature between the second warmed first refrigerant stream 180 and the temperature of at least one of the streams at the warm end of the second heat exchanger 145 is determined. Said stream at the warm end of the second heat exchanger 145 can be selected from the group consisting of the second portion 130b of the first cooled first refrigerant stream 130 and one of the one or more second streams (for which can be used one or more of streams 30,50,230) in the form of the cooled first stream 30,230 and/or the dependent stream derived from the cooled first stream. It is preferred that the temperature difference of the combination of streams giving rise to the lowest temperature difference is given relatively more weight as controlled variable.

The temperatures and temperature differences required to determine the first four controlled variables listed above can be measured by temperature sensors monitoring the temperatures in the relevant streams. The temperature sensors can transmit temperature sensor signals to the advanced process controller, which operates the control method described herein. In response to the temperature signals, control signals can be sent to, for instance, actuators for the expansion devices and/or first refrigerant drain and component make-up streams, in order to change one or more of the manipulated variables. Similarly, the power requirements of the first compressor(s) can be measured by sensors in the compressor(s) or corresponding first compressor driver(s), and transmitted to the advanced process controller.

The set of parameters to be optimised comprises the production rate of the cooled hydrocarbon stream and/or the cooling efficiency of the first refrigerant circuit.

The production rate of the cooled hydrocarbon stream may be determined by measuring the mass flow, or a related property, for instance using a flow sensor. The cooling efficiency of the first refrigerant circuit can be calculated by known techniques based upon the power requirements of the first compressors in relation to the mass of cooled hydrocarbon stream 60 produced over time.

An important feature of model predictive control is that future behaviour is predicted using a model and available measurements of the controlled variables. As is further explained in Perry's Chemical Engineers' Handbook, 7th Edition, pages 8-25 to 8-27, the controller outputs are calculated so as to optimize a performance index, which can be a linear or quadratic function of the predicted errors and the calculated future control moves. At each sampling instant, the control calculations are repeated and the predictions updated based upon current measurements. A suitable model is one which comprises a set of empirical step-response models expressing the effects of a step-response of a manipulated variable on the controlled variables.

An optimum value of the parameter to be optimised can be obtained from a separate optimization step, or the variable to be optimized can be included in the performance function.

Before model predictive control can be applied, the effect of step changes of the manipulated variables on the variable to be optimised and on the controlled variables is first determined. This operation provides a set of step-response coefficients. The set of step response coefficients forms the basis of the model predictive control of the cooling process.

During normal operation, the predicted values of the controlled variables are regularly calculated for a number of future control moves. A performance index can then be calculated for these future control moves. The performance index can include two terms, a first term representing the sum over the future control moves of the predicted error for each control move and a second term representing the sum over the future control moves of the change in the manipulated variables for each control move.

For each controlled variable, the predicted error is the difference between the predicted value of the controlled variable and a reference value of the controlled variable. The predicted errors are multiplied with a weighting factor, and the changes in the manipulated variables for a control move are multiplied with a move suppression factor. In such a case the performance index would be linear. Alternatively, the terms may be a sum of squared terms, in which case the performance index is quadratic.

Constraints can be set on the manipulated variables, the change in manipulated variables and on controlled variables. This results in a separate set of equations that are solved simultaneously with the minimization of the performance index.

When optimization is performed separately, the parameters to be optimized are included as controlled variables in the predicted error for each control move and the optimization gives a reference value for the controlled variables.

Alternatively, optimization is done within the calculation of the performance index, and this gives a third term in the performance index with an appropriate weighting factor. In this case, the reference values of the controlled variables are pre-determined steady state values which remain constant.

The performance index is minimized taking into account the constraints to give the values of the manipulated variables for the future control moves. However, only the next control move is executed. Then the calculation of the performance index for future moves starts again.

The models with the step response coefficients and the equations for model predictive control can be part of a computer program which is executed in order to control the cooling process. A computer loaded with such a program which can handle model predictive control is called an advanced process controller. Basic program packages, absent of the particular model predictive control disclosed herein, are commercially available and will be known to the skilled person. The methods and apparatuses described herein benefit from the advantageous selection of the sets of the manipulated and controlled variables.

For example, in one embodiment when the first mixed refrigerant comprises at least methane, ethane and propane, the manipulated variable comprising the composition of the inventory of the first mixed refrigerant in the first refrigerant circuit 100 can comprise manipulating one or more of the methane, ethane and propane content in the first refrigerant inventory.

The methods and apparatuses described herein may be used for liquefying any hycrocarbon stream, but are expected to be particularly useful in the liquefaction of natural gas, to provide liquefied natural gas (LNG).

The hydrocarbon stream may thus be any suitable gas stream to be cooled and optionally liquefied, but is suitably a natural gas stream obtained from natural gas or petroleum reservoirs. As an alternative the natural gas stream may also be obtained from another source, also including a synthetic source such as a Fischer-Tropsch process.

Usually a natural gas stream is a hydrocarbon composition comprised substantially of methane. Preferably the hydrocarbon feed stream comprises at least 50 mol% methane, more preferably at least 80 mol% methane.

Hydrocarbon compositions such as natural gas may also contain non-hydrocarbons such as H₂O, N₂, CO₂, Hg, H₂S and other sulphur compounds, and the like. If desired, the natural gas may be pre-treated before cooling and any liquefying. This pre-treatment may comprise reduction and/or removal of undesired components such as CO₂ and H₂S or other steps such as early cooling, pre-pressurizing or the like. As these steps are well known to the person skilled in the art, their mechanisms are not further discussed here.

Thus, the term "hydrocarbon stream" may also include a composition prior to any treatment, such treatment including cleaning, dehydration and/or scrubbing, as well as any composition having been partly, substantially or wholly treated for the reduction and/or removal of one or more compounds or substances, including but not limited to sulphur, sulphur compounds, carbon dioxide, water, Hg, and one or more C₂+ hydrocarbons.

Depending on the source, natural gas may contain varying amounts of hydrocarbons heavier than methane such as in particular ethane, propane and the butanes, and possibly lesser amounts of pentanes and aromatic hydrocarbons. The composition varies depending upon the type and location of the gas.

Conventionally, the hydrocarbons heavier than butane are removed as far as efficiently possible from the hydrocarbon stream prior to any significant cooling for several reasons, such as having different freezing or liquefaction temperatures that may cause them to block parts of a methane liquefaction plant. C₂+ hydrocarbons can be separated from, or their content reduced in a hydrocarbon feed stream by a demethaniser, which will provide an overhead hydrocarbon stream which is methane-rich and a bottoms methane-lean stream comprising most of the C₂+ hydrocarbons. The bottoms methane-lean stream can then be passed to further separators to provide Liquefied Petroleum Gas (LPG) and condensate streams.

After separation, the hydrocarbon stream so produced can be cooled. This is shown e.g. by line 50 in Figure 2 above. The cooling could be provided by a number of methods known in the art, including so-called double mixed refrigerant (DMR) processes, such as but not limited to the processes explained above and in e.g. US Pat. 5,826,444; US Pat. 6,041,619; US Pat. 6,105,389; US Pat. 7,096,688; US pat. 6,370,910; WO 2008/009721; WO 2008/019999; WO 2008/043806; WO 2009/007435 and including so-called single mixed refrigerant (SMR) processes such as but not limited to the processes explained in e.g. US Pat. 6,041,619; US Pat. 6658891; US Pat. 5832745. The hydrocarbon stream is passed against one or more refrigerant streams in one or more refrigerant circuits. Such a refrigerant circuit can comprise one or more compressors to compress an at least partly evaporated refrigerant stream to provide a compressed refrigerant stream. The compressed refrigerant stream can then be cooled in a cooler, such as an air or water cooler, to provide the refrigerant stream. The compressors can be driven by one or more turbines.

The cooling of the hydrocarbon stream can be carried out in one or more stages. Initial cooling, also called pre-cooling or auxiliary cooling, can be carried out using a pre-cooling mixed refrigerant of a pre-cooling refrigerant circuit, in two or more pre-cooling heat exchangers, to provide a cooled hydrocarbon stream. The cooled hydrocarbon stream us preferably partially liquefied, such as at a temperature below 0°C.

Preferably, such pre-cooling heat exchangers could comprise a pre-cooling stage, with any subsequent cooling being carried out in one or more main heat exchangers to liquefy a fraction of the hydrocarbon stream in one or more main and/or sub-cooling cooling stages.

The first and second heat exchangers discussed in the embodiments above may be such pre-cooling heat exchangers in a pre-cooling stage, and the first mixed refrigerant may be a pre-cooling mixed refrigerant.

In this way, the method disclosed herein may involve two or more cooling stages, each stage having one or more steps, parts etc. For example, each cooling stage may comprise one to five heat exchangers. The or a fraction of a hydrocarbon stream and/or the mixed refrigerant may not pass through all, and/or all the same, the heat exchangers of a cooling stage.

In one embodiment, the hydrocarbon cooling process may comprise a single cooling stage. In a further embodiment, the hydrocarbon may be cooled and liquefied in a method comprising two or three cooling stages. A pre-cooling stage is preferably intended to reduce the temperature of a hydrocarbon feed stream to below 0°C, usually in the range -20°C to -70°C.

A main cooling stage is preferably separate from the pre-cooling stage. That is, the main cooling stage comprises one or more separate main heat exchangers. The main cooling stage may be refrigerated using the second refrigerant stream discussed hereinabove.

A main cooling stage is preferably intended to reduce the temperature of a hydrocarbon stream, usually at least a fraction of a hydrocarbon stream cooled by a pre-cooling stage, to below -100°C.

Heat exchangers for use as the two or more pre-cooling or any main heat exchangers are well known in the art. The pre-cooling heat exchangers are preferably shell and tube heat exchangers.

At least one of any of the main heat exchangers is preferably a spool-wound cryogenic heat exchanger known in the art. Optionally, a heat exchanger could comprise one or more cooling sections within its shell, and each cooling section could be considered as a cooling stage or as a separate 'heat exchanger' to the other cooling locations.

In another embodiment described herein, one or both of the mixed pre-cooling refrigerant stream and any mixed main refrigerant stream can be passed through one or more heat exchangers, preferably two or more of the pre-cooling and main heat exchangers described hereinabove, to provide cooled mixed refrigerant streams.

The mixed refrigerant in a mixed refrigerant circuit, such as the first (e.g. pre-cooling) refrigerant circuit or any main refrigerant circuit, may be formed from a mixture of two or more components selected from the group comprising: nitrogen, methane, ethane, ethylene, propane, propylene, butanes, pentanes, etc. The present invention may involve the use of one or more other refrigerants, in separate or overlapping refrigerant circuits or other cooling circuits.

A mixed refrigerant or a mixed refrigerant stream as referred to herein comprises at least 5 mol% of two different components. More preferably, the mixed refrigerant comprises two or more of the group comprising: methane, ethane, ethylene, propane, propylene, butanes and pentanes. A common composition for a mixed refrigerant can be:

| | |
|---|---|
| Methane (C1) | 0-20 mol% |
| Ethane (C2) | 5-80 mol% |
| Propane (C3) | 5-80 mol% |
| Butanes (C4) | 0-15 mol% |

The total composition comprises 100 mol%.

In another embodiment, the cooled hydrocarbon stream, such as a cooled natural gas stream can be further cooled to provide a liquefied hydrocarbon stream, such as an LNG stream.

Preferably, the cooled hydrocarbon stream provided by the method and apparatus described herein can be used to provide a liquefied hydrocarbon stream which can be stored in one or more storage tanks.

After liquefaction, the liquefied hydrocarbon stream may be further processed, if desired. As an example, the obtained liquefied hydrocarbon may be depressurized by means of a Joule-Thomson valve or by means of a cryogenic turbo-expander.

In another embodiment disclosed herein, the liquefied hydrocarbon stream is passed through an end gas/liquid separator such as an end-flash vessel to provide an end-flash gas stream overhead and a liquid bottom stream, the latter optionally for storage in a storage tank as the liquefied product, such as LNG. The end-flash gas can be compressed in an end-flash gas compressor to provide a compressed end-flash gas stream and cooled to provide a cooled end-flash gas stream, which can be passed to one or more fuel gas headers, or for export as fuel gas.

The person skilled in the art will understand that the present invention can be carried out in many various ways without departing from the scope of the appended claims.

## Claims

1. Method of producing a cooled hydrocarbon stream (60) comprising cooling of a hydrocarbon stream, the method comprising at least the steps of:
(a) cooling a first stream (220) and a compressed first refrigerant stream (120) in a first refrigerant circuit (100) comprising a first compressor (105) and a first mixed refrigerant, against a first expanded first refrigerant stream (140) in a first heat exchanger (125) at a first pressure level, to provide a cooled first stream (230), a first cooled first refrigerant stream (130) and a first warmed first refrigerant stream (150);
(b) expanding a first portion (130a) of the first cooled first refrigerant stream (130) in a first expansion device (135) to provide the first expanded first refrigerant stream (140);
(c) cooling one or more second streams (50,230), and a second portion (130b) of the first cooled first refrigerant stream (130) against a second expanded first refrigerant stream (170) in a second heat exchanger (145) to provide one or more cooled second streams (60,240), a further cooled first refrigerant stream (160), and a second warmed first refrigerant stream (180), wherein the one or more second streams comprise at least the cooled first stream or a dependent stream derived therefrom, whereby the hydrocarbon stream (50) is comprised in the one or more second streams in order to provide at least the cooled hydrocarbon stream (60);
(d) expanding at least a first portion of the further cooled first refrigerant stream (160) in a second expansion device (165) to provide the second expanded first refrigerant stream (170), said second expanded
(e) first refrigerant stream (170) being at a lower pressure than said first expanded first refrigerant stream (140), and
(e) compressing gaseous fractions (150',180') of the first warmed first refrigerant stream (150) and the second warmed first refrigerant stream (180) in the first compressor (105)and subsequently cooling the compressed stream (110) from the first compressor, (105) to provide the compressed first refrigerant stream (120);
**characterized in that** the method further comprises:
controlling the steps (a) to (e) using an advanced process controller based on model predictive control to determine simultaneous control actions for a set of manipulated variables in order to optimise at least one of a set of parameters to be optimized, whilst controlling at least one of a set of controlled variables, wherein the set of manipulated variables comprises:
- the composition of the first mixed refrigerant inventory in the first refrigerant circuit (100),
- the setting of the first expansion device (135), and
- the setting of the second expansion device (165),
wherein the set of controlled variables comprises:
- the temperature of at least one of the one or more cooled second streams (60,240),
- the temperature difference between the first warmed first refrigerant stream (150) and at least one of (i) the compressed first refrigerant stream (120) and (ii) the first stream (220),
- the temperature difference between the second warmed first refrigerant stream (180) and at least one of (i) the second portion (130b) of the first cooled first refrigerant stream (140) and (ii) one of the one or more second streams (50,230) in the form of the cooled first stream (230) and/or the dependent stream derived from the cooled first stream,
- at least one of (i) the temperature difference between the first cooled first refrigerant stream (130) and the first expanded first refrigerant stream (140) and (ii) the temperature difference between the further cooled first refrigerant stream (160) and the second expanded first refrigerant stream (170), and
- the power being consumed by the first compressor (105);
and wherein the set of parameters to be optimised comprises the production rate of the cooled hydrocarbon stream and/or the cooling efficiency of the first refrigerant circuit (100), said cooling efficiency reflecting the power consumed in the first compressor (105) in relation to the mass of cooled hydrocarbon stream (60) produced over time.

2. The method according to claim 1, wherein the first mixed refrigerant comprises at least methane, ethane and propane and wherein manipulating the composition of the first mixed refrigerant comprises manipulating one or more of the methane, ethane and propane inventory of the first mixed refrigerant in the first refrigerant circuit.

3. The method according to any of the preceding claims, wherein the first stream comprises a hydrocarbon feed stream, whereby the cooled first stream comprises a cooled hydrocarbon feed stream, and wherein the one or more second streams comprises the cooled hydrocarbon feed stream or the dependent stream derived from the cooled first stream.

4. The method according to claim 3, further comprising, prior to step (c), deriving the hydrocarbon from the cooled first stream by fractionating the cooled hydrocarbon feed stream in a natural gas liquids recovery column to provide the hydrocarbon stream and a liquid bottoms stream.

5. The method according to any of the preceding claims, wherein the first stream comprises a second refrigerant stream of a second mixed refrigerant in a second refrigerant circuit, whereby the cooled first stream comprises a cooled second refrigerant stream, and wherein the one or more second streams comprises the cooled second refrigerant stream as well as the hydrocarbon stream, and the one or more cooled second streams comprises a further cooled second refrigerant stream and the cooled hydrocarbon stream.

6. The method according to any of the preceding claims, wherein cooling the first stream comprises cooling two or more first streams in the same first heat exchanger or each in a separate high pressure first heat exchanger.

7. The method according to any of the preceding claims, wherein cooling the one or more second streams comprises cooling two or more second streams in the same second heat exchanger or each in a separate second heat exchanger.

8. The method according to any of the preceding claims, further comprising the step of:
(h) at least partially, preferably fully, liquefying at least a fraction of the cooled hydrocarbon stream in a main heat exchanger.

9. The method according to claim 8, further comprising the step of:
(f) separating the cooled hydrocarbon stream in a first separator to provide the fraction in the form of a methane-rich stream overhead and a methane-depleted bottoms stream; and optionally
(g) pressurising the methane-depleted bottoms stream to provide a (pressurised) methane-depleted bottoms stream and passing said (pressurised) methane-depleted bottoms stream to a natural gas liquids recovery column as reflux.

10. The method according to claim 8 or 9, wherein the at least partially, preferably fully, liquefying the fraction of the cooled hydrocarbon stream comprises heat exchanging the methane-rich stream against a second refrigerant to provide an at least partially, preferably fully, liquefied hydrocarbon stream.

11. The method according to claim 8 or 9, wherein the at least partially, preferably fully, liquefying the fraction of the cooled hydrocarbon stream comprises heat exchanging the fraction against a second portion of the further cooled first refrigerant stream, to provide an at least partially, preferably fully, liquefied hydrocarbon stream.

12. The method according to any one of claims 8 to 11, further comprising the step of:
(i) reducing the pressure of the at least partially, preferably fully, liquefied stream to provide a liquefied hydrocarbon product stream and an end flash gas stream.

13. The method according to any one of the preceding claims, wherein the hydrocarbon stream is a natural gas stream.

14. The method according to any of the preceding claims wherein the composition of the first portion being expanded in step (b) is the substantially the same as the composition of the at least the portion of the further cooled first refrigerant stream being expanded in step (d) .

15. Apparatus for producing a cooled hydrocarbon stream (60) from a hydrocarbon stream, comprising:
- a first refrigerant circuit (100) comprising an inventory of a first mixed refrigerant; a first expansion device (135); a second expansion device (165); a first compressor (105) and one or more first coolers (115a,115b,115c) to cool a compressed stream (110) from the first compressor thereby to provide a compressed first refrigerant stream (120);
- a first heat exchanger (125) arranged to cool a first stream (220) and the compressed first refrigerant stream (120), against a first expanded first refrigerant stream (140) at a first pressure level, to provide a cooled first stream (230), a first cooled first refrigerant stream (130) and a first warmed first refrigerant stream (150), the first expansion device (135) being arranged to receive a first portion (130a) of the first cooled first refrigerant stream (130) and to provide the first expanded first refrigerant stream (140);
- a second heat exchanger (145) arranged to cool one or more second streams (50,230) and a second portion (130b) of the first cooled first refrigerant stream (130), against a second expanded first refrigerant stream (170) to provide one or more cooled second streams (60,240), a further cooled first refrigerant stream (160) and a second warmed first refrigerant stream (180), the second expansion device (165) being arranged to receive at least a first portion of the further cooled first refrigerant stream (160) to provide the second expanded first refrigerant stream (170), said second expanded first refrigerant stream (170) being at a lower pressure than said first expanded first refrigerant stream (140), said one or more second streams (50,230) comprising at least the cooled first stream or a dependent stream derived therefrom, whereby the hydrocarbon stream (50) is comprised in the one or more second streams in order to provide at least the cooled hydrocarbon stream (60);
- the first compressor (105) being arranged to compress gaseous fractions (150',180') of the first warmed first refrigerant stream (150) and the second warmed first refrigerant stream (180); **characterized in that** the apparatus further comprises:
- an advanced process controller comprising computer-executable coded based on model predictive control to determine simultaneous control actions for a set of manipulated variables in order to optimise at least one of a set of parameters to be optimized, whilst controlling at least one of a set of controlled variables, wherein the set of manipulated variables comprises:
- the composition of the first mixed refrigerant inventory in the first refrigerant circuit (100),
- the setting of the first expansion device (135), and
- the setting of the second expansion device (165),
wherein the set of controlled variables comprises:
- the temperature of at least one of the one or more cooled second streams (60,240),
- the temperature difference between the first warmed first refrigerant stream (150) and at least one of (i) the compressed first refrigerant stream (120) and (ii) the first stream (220),
- the temperature difference between the second warmed first refrigerant stream (180) and at least one of (i) the second portion (130b) of the first cooled first refrigerant stream (140) and (ii) one of the one or more second streams (50,230) in the form of the cooled first stream (230) and/or the dependent stream derived from the cooled first stream,
- at least one of (i) the temperature difference between the first cooled first refrigerant stream (130) and the first expanded first refrigerant stream (140) and (ii) the temperature difference between the further cooled first refrigerant stream (160) and the second expanded first refrigerant stream (170), and
- the power being consumed by the first compressor (105);
and wherein the set of parameters to be optimised comprises the production rate of the cooled hydrocarbon stream (60) and/or the cooling efficiency of the first refrigerant circuit (100) said cooling efficiency reflecting the power consumed in the first compressor (105) in relation to the mass of cooled hydrocarbon stream (60) produced over time.

## Patentansprüche

1. Verfahren zur Erzeugung eines gekühlten Kohlenwasserstoffstroms (60), umfassend das Kühlen eines Kohlenwasserstoffstroms, wobei das Verfahren zumindest die folgenden Schritte umfasst:
(a) Kühlen eines ersten Stroms (220) und eines komprimierten ersten Kühlmittelstroms (120) in einem ersten Kühlmittelkreislauf (100), umfassend einen ersten Kompressor (105) und ein erstes gemischtes Kühlmittel, gegen einen ersten ausgedehnten ersten Kühlmittelstrom (140) in einem ersten Wärmetauscher (125) bei einem ersten Druckniveau, um einen gekühlten ersten Strom (230), einen ersten gekühlten ersten Kühlmittelstrom (130) und einen ersten erwärmten ersten Kühlmittelstrom (150) bereitzustellen;
(b) Ausdehnen eines ersten Teils (130a) des ersten gekühlten ersten Kühlmittelstroms (130) in einer ersten Ausdehnungsvorrichtung (135), um den ersten ausgedehnten ersten Kühlmittelstrom (140) bereitzustellen;
(c) Kühlen von einem oder mehreren zweiten Strömen (50, 230) und einem zweiten Teil (130b) des ersten gekühlten ersten Kühlmittelstroms (130) gegen einen zweiten ausgedehnten ersten Kühlmittelstrom (170) in einem zweiten Wärmetauscher (145), um einen oder mehrere gekühlte zweite Ströme (60, 240), einen weiteren gekühlten ersten Kühlmittelstrom (160) und einen zweiten erwärmten ersten Kühlmittelstrom (180) bereitzustellen, wobei der eine oder die mehreren zweiten Ströme zumindest den gekühlten ersten Strom oder einen daraus gewonnenen abhängigen Strom umfassen, wobei der Kohlenwasserstoffstrom (50) in dem einen oder den mehreren zweiten Strömen umfasst ist, um zumindest den gekühlten Kohlenwasserstoffstrom (60) bereitzustellen;
(d) Ausdehnen von zumindest einem ersten Teil des weiteren gekühlten ersten Kühlmittelstroms (160) in einer zweiten Ausdehnungsvorrichtung (165), um den zweiten ausgedehnten ersten Kühlmittelstrom (170) bereitzustellen, wobei der zweite ausgedehnte erste Kühlmittelstrom (170) einen geringeren Druck hat als der erste ausgedehnte erste Kühlmittelstrom (140), und
(e) Komprimieren von gasförmigen Fraktionen (150', 180') des ersten erwärmten ersten Kühlmittelstroms (150) und des zweiten erwärmten ersten Kühlmittelstroms (180) im ersten Kompressor (105) und nachfolgendes Abkühlen des komprimierten Stroms (110) vom ersten Kompressor (105), um den komprimierten ersten Kühlmittelstrom (120) bereitzustellen;
**dadurch gekennzeichnet, dass** das Verfahren ferner Folgendes umfasst:
Steuern der Schritte (a) bis (e) unter Verwendung einer fortgeschrittenen Prozesssteuerung basierend auf Model Predictive Control, um gleichzeitige Steuerungsvorgänge für eine Reihe von manipulierten Variablen zu bestimmen, um zumindest einen aus einer Reihe von zu optimierenden Parametern zu optimieren, während zumindest eine aus einer Reihe von gesteuerten Variablen gesteuert wird, wobei die Reihe von manipulierten Variablen Folgendes umfasst:
- die Zusammensetzung des ersten gemischten Kühlmittelbestands im ersten Kühlmittelkreislauf (100),
- das Einstellen der ersten Ausdehnungsvorrichtung (135), und
- das Einstellen der zweiten Ausdehnungsvorrichtung (165), wobei die Reihe von gesteuerten Variablen Folgendes umfasst:
- die Temperatur von zumindest einem oder mehreren gekühlten zweiten Strömen (60, 240),
- der Temperaturunterschied zwischen dem ersten erwärmten ersten Kühlmittelstrom (150) und zumindest einem von (i) dem komprimierten ersten Kühlmittelstrom (120) und (ii) dem ersten Strom (220),
- der Temperaturunterschied zwischen dem zweiten erwärmten ersten Kühlmittelstrom (180) und zumindest einem von (i) dem zweiten Teil (130b) des ersten gekühlten ersten Kühlmittelstroms (140) und (ii) einem des einen oder der mehreren zweiten Ströme (50, 230) in der Form des gekühlten ersten Stroms (230) und/oder des abhängigen Stroms, der aus dem gekühlten ersten Strom gewonnen wird,
- zumindest einer von (i) dem Temperaturunterschied zwischen dem ersten gekühlten ersten Kühlmittelstrom (130) und dem ersten ausgedehnten ersten Kühlmittelstrom (140) und (ii) dem Temperaturunterschied zwischen dem weiteren gekühlten ersten Kühlmittelstrom (160) und dem zweiten ausgedehnten ersten Kühlmittelstrom (170), und
- die Energie, die vom ersten Kompressor (105) verbraucht wird;
und wobei die Reihe von zu optimierenden Parametern die Produktionsrate des gekühlten Kohlenwasserstoffstroms und/oder die Kühleffizienz des ersten Kühlmittelkreislaufs (100) umfasst, wobei die Kühleffizienz die Energie widerspiegelt, die im ersten Kompressor (105) in Bezug auf die Masse des gekühlten Kohlenwasserstoffstroms (60), der im Laufe der Zeit produziert wird, verbraucht wird.

2. Verfahren nach Anspruch 1, wobei das erste gemischte Kühlmittel zumindest Methan, Ethan und Propan umfasst, und wobei das Manipulieren der Zusammensetzung des ersten gemischten Kühlmittels das Manipulieren von einem oder mehreren des Methan-, Ethan- und Propanbestands des ersten gemischten Kühlmittels im ersten Kühlmittelkreislauf umfasst.

3. Verfahren nach einem der vorstehenden Ansprüche, wobei der erste Strom einen Kohlenwasserstoffzufuhrstrom umfasst, wobei der gekühlte erste Strom einen gekühlten Kohlenwasserstoffzufuhrstrom umfasst, und wobei der eine oder die mehreren zweiten Ströme den gekühlten Kohlenwasserstoffzufuhrstrom oder den abhängigen Strom, der aus dem gekühlten ersten Strom gewonnen wird, umfassen.

4. Verfahren nach Anspruch 3, ferner umfassend, vor Schritt (c), das Gewinnen des Kohlenwasserstoffs aus dem gekühlten ersten Strom durch Fraktionieren des gekühlten Kohlenwasserstoffzufuhrstroms in einer Flüssigerdgas-Rückgewinnungssäule, um den Kohlenwasserstoffstrom und einen Bodenflüssigkeitsstrom bereitzustellen.

5. Verfahren nach einem der vorstehenden Ansprüche, wobei der erste Strom einen zweiten Kühlmittelstrom eines zweiten gemischten Kühlmittels in einem zweiten Kühlmittelkreislauf umfasst, wobei der gekühlte erste Strom einen gekühlten zweiten Kühlmittelstrom umfasst, und wobei der eine oder die mehreren zweiten Ströme den gekühlten zweiten Kühlmittelstrom sowie den Kohlenwasserstoffstrom umfassend, und der eine oder die mehreren zweiten Ströme einen weiteren gekühlten zweiten Kühlmittelstrom und den gekühlten Kohlenwasserstoffstrom umfassen.

6. Verfahren nach einem der vorstehenden Ansprüche, wobei das Kühlen des ersten Stroms das Kühlen von zwei oder mehr ersten Strömen im gleichen ersten Wärmetauscher oder von jedem in einem separaten ersten Hochdruck-Wärmetauscher umfasst.

7. Verfahren nach einem der vorstehenden Ansprüche, wobei das Kühlen des einen oder der mehreren ersten Ströme das Kühlen von zwei oder mehr zweiten Strömen im gleichen zweiten Wärmetauscher oder von jedem in einem separaten zweiten Wärmetauscher umfasst.

8. Verfahren nach einem der vorhergehenden Ansprüche, ferner umfassend den folgenden Schritt:
(h) zumindest teilweises, bevorzugt vollständiges Verflüssigen von zumindest einem Anteil des gekühlten Kohlenwasserstoffstroms in einem Hauptwärmetauscher.

9. Verfahren nach Anspruch 8, ferner umfassend den folgenden Schritt:
(f) Trennen des gekühlten Kohlenwasserstoffstroms in einer ersten Trennvorrichtung, um den Anteil in der Form eines methanreichen Stroms darüber und eines methanabgereicherten Bodenstroms bereitzustellen; und gegebenenfalls
(g) Druckbeaufschlagen des methanabgereicherten Bodenstroms, um einen (druckbeaufschlagten) methanabgereicherten Bodenstrom bereitzustellen, und Leiten des (druckbeaufschlagten) methanabgereicherten Bodenstroms zu einer Flüssigerdgas-Rückgewinnungssäule als Rückfluss.

10. Verfahren nach Anspruch 8 oder 9, wobei das zumindest teilweise, bevorzugt vollständige Verflüssigen des Anteils des gekühlten Kohlenwasserstoffstroms das Wärmetauschen des methanreichen Stroms gegen ein zweites Kühlmittel umfasst, um einen zumindest teilweise, bevorzugt vollständig verflüssigten Kühlmittelstrom bereitzustellen.

11. Verfahren nach Anspruch 8 oder 9, wobei das zumindest teilweise, bevorzugt vollständige Verflüssigen des Anteils des gekühlten Kohlenwasserstoffstroms das Wärmetauschen des Anteils gegen einen zweiten Teil des weiteren gekühlten ersten Kühlmittelstroms umfasst, um einen zumindest teilweise, bevorzugt vollständig verflüssigten Kühlmittelstrom bereitzustellen.

12. Verfahren nach einem der Ansprüche 8 bis 11, ferner umfassend den folgenden Schritt:
(i) Reduzieren des Drucks des zumindest teilweise, bevorzugt vollständig verflüssigten Stroms, um einen verflüssigten Kohlenwasserstoffproduktstrom und einen Endspülgasstrom bereitzustellen.

13. Verfahren nach einem der vorhergehenden Ansprüche, wobei der Kohlenwasserstoffstrom ein Erdgasstrom ist.

14. Verfahren nach einem der vorstehenden Ansprüche, wobei die Zusammensetzung des ersten Teils, der in Schritt (b) ausgedehnt wird, im Wesentlichen die gleiche ist wie die Zusammensetzung von zumindest dem Teil des weiteren gekühlten ersten Kühlmittelstroms, der in Schritt (d) ausgedehnt wird.

15. Vorrichtung zur Erzeugung eines gekühlten Kohlenwasserstoffstroms (60) aus einem Kohlenwasserstoffstrom, umfassend:
- einen ersten Kühlmittelkreislauf (100) umfassend einen Bestand von einem ersten gemischten Kühlmittel; eine erste Ausdehnungsvorrichtung (135); eine zweite Ausdehnungsvorrichtung (165); einen ersten Kompressor (105) und einen oder mehrere erste Kühler (115a, 115b, 115c), um einen komprimierten Strom (110) vom ersten Kompressor zu kühlen, wodurch ein komprimierter erster Kühlmittelstrom (120) bereitgestellt wird;
- einen ersten Wärmetauscher (125), der angeordnet ist, um einen ersten Strom (220) und den komprimierten ersten Kühlmittelstrom (120) gegen einen ersten ausgedehnten ersten Kühlmittelstrom (140) auf einem ersten Druckniveau zu kühlen, um einen gekühlten ersten Strom (230), einen ersten gekühlten ersten Kühlmittelstrom (130) und einen ersten erwärmten ersten Kühlmittelstrom (150) bereitzustellen, wobei die erste Ausdehnungsvorrichtung (135) so angeordnet ist, dass sie einen ersten Teil (130a) des ersten gekühlten ersten Kühlmittelstroms (130) aufnimmt und den ersten ausgedehnten ersten Kühlmittelstrom (140) bereitstellt;
- einen zweiten Wärmetauscher (145), der so angeordnet ist, dass er einen oder mehrere zweite Ströme (50, 230) und einen zweiten Teil (130b) des ersten gekühlten ersten Kühlmittelstroms (130) gegen einen zweiten ausgedehnten ersten Kühlmittelstrom (170) kühlt, um einen oder mehrere gekühlte zweite Ströme (60, 240), einen weiteren gekühlten ersten Kühlmittelstrom (160) und einen zweiten erwärmten ersten Kühlmittelstrom (180) bereitzustellen, wobei die zweite Ausdehnungsvorrichtung (165) so angeordnet ist, dass sie zumindest einen ersten Teil des weiteren gekühlten ersten Kühlmittelstroms (160) aufnimmt, um den zweiten ausgedehnten ersten Kühlmittelstrom (170) bereitzustellen, wobei der zweite ausgedehnte erste Kühlmittelstrom (170) einen geringeren Druck als der erste ausgedehnte erste Kühlmittelstrom (140) hat, wobei der eine oder die mehreren zweiten Ströme (50, 230) zumindest den gekühlten ersten Strom oder einen daraus gewonnenen anhängigen Strom umfassen, wobei der Kohlenwasserstoffstrom (50) in dem einen oder den mehreren zweiten Strömen umfasst ist, um zumindest den gekühlten Kohlenwasserstoffstrom (60) bereitzustellen;
- einen ersten Kompressor (105), der so angeordnet ist, dass er gasförmige Fraktionen (150', 180') des ersten erwärmten ersten Kühlmittelstroms (150) und des zweiten erwärmten ersten Kühlmittelstroms (180) komprimiert; **dadurch gekennzeichnet, dass** die Vorrichtung ferner Folgendes umfasst:
- eine fortgeschrittene Prozesssteuerung umfassend computerausführbare Codierung basierend auf Model Predictive Control, um gleichzeitige Steuerungsvorgänge für eine Reihe von manipulierten Variablen zu bestimmen, um zumindest einen aus einer Reihe von zu optimierenden Parametern zu optimieren, während zumindest eine aus einer Reihe von gesteuerten Variablen gesteuert wird, wobei die Reihe von manipulierten Variablen Folgendes umfasst:
- die Zusammensetzung des ersten gemischten Kühlmittelbestands im ersten Kühlmittelkreislauf (100),
- das Einstellen der ersten Ausdehnungsvorrichtung (135), und
- das Einstellen der zweiten Ausdehnungsvorrichtung (165), wobei die Reihe von gesteuerten Variablen Folgendes umfasst:
- die Temperatur von zumindest einem oder mehreren gekühlten zweiten Strömen (60, 240),
- der Temperaturunterschied zwischen dem ersten erwärmten ersten Kühlmittelstrom (150) und zumindest einem von (i) dem komprimierten ersten Kühlmittelstrom (120) und (ii) dem ersten Strom (220),
- der Temperaturunterschied zwischen dem zweiten erwärmten ersten Kühlmittelstrom (180) und zumindest einem von (i) dem zweiten Teil (130b) des ersten gekühlten ersten Kühlmittelstroms (140) und (ii) einem des einen oder der mehreren zweiten Ströme (50, 230) in der Form des gekühlten ersten Stroms (230) und/oder des abhängigen Stroms, der aus dem gekühlten ersten Strom gewonnen wird,
- zumindest einer von (i) dem Temperaturunterschied zwischen dem ersten gekühlten ersten Kühlmittelstrom (130) und dem ersten ausgedehnten ersten Kühlmittelstrom (140) und (ii) dem Temperaturunterschied zwischen dem weiteren gekühlten ersten Kühlmittelstrom (160) und dem zweiten ausgedehnten ersten Kühlmittelstrom (170), und
- die Energie, die vom ersten Kompressor (105) verbraucht wird;
und wobei die Reihe von zu optimierenden Parametern die Produktionsrate des gekühlten Kohlenwasserstoffstroms (60) und/oder die Kühleffizienz des ersten Kühlmittelkreislaufs (100) umfasst, wobei die Kühleffizienz die Energie widerspiegelt, die im ersten Kompressor (105) in Bezug auf die Masse des gekühlten Kohlenwasserstoffstroms (60), der im Laufe der Zeit produziert wird, verbraucht wird.

## Revendications

1. Procédé pour la production d'un flux d'hydrocarbure refroidi (60) comprenant le refroidissement d'un flux d'hydrocarbure, le procédé comprenant au moins les étapes suivantes :
(a) le refroidissement d'un premier flux (220) et d'un premier flux de réfrigérant compressé (120) dans un premier circuit réfrigérant (100) comprenant un premier compresseur (105) et un premier réfrigérant mélangé, contre un premier flux de réfrigérant détendu (140) dans un premier échangeur de chaleur (125) à un premier niveau de pression, afin de fournir un premier flux refroidi (230), un premier flux de réfrigérant refroidi en premier (130) et un premier flux de réfrigérant réchauffé en premier (150) ;
(b) l'expansion d'une première partie (130a) du premier flux de réfrigérant refroidi en premier (130) dans un premier dispositif d'expansion (135) afin de produire le premier flux de réfrigérant détendu en premier (140) ;
(c) le refroidissement d'un ou de plusieurs seconds flux (50, 230) et d'une seconde partie (130b) du premier flux de réfrigérant refroidi (130) contre un second flux de réfrigérant détendu en premier (170) dans un second échangeur de chaleur (145) afin de produire un ou plusieurs seconds flux refroidis (60, 240), un premier flux de réfrigérant davantage refroidi (160), et un second flux de réfrigérant réchauffé en premier (180), dans lequel les un ou plusieurs seconds flux comprennent au moins le premier flux refroidi ou un flux dépendant dérivé de celui-ci, dans lequel le flux d'hydrocarbure (50) est compris dans les un ou plusieurs seconds flux afin de fournir au moins le flux d'hydrocarbure refroidi (60) ;
(d) l'expansion d'au moins une première partie du premier flux de réfrigérant davantage refroidi (160) dans un second dispositif d'expansion (165) afin de fournir le second flux de réfrigérant détendu en premier (170), ledit second flux de réfrigérant détendu en premier (170) étant à une pression inférieure à celle dudit premier flux de réfrigérant détendu en premier (140), et
(e) la compression de fractions gazeuses (150', 180') du premier flux de réfrigérant réchauffé en premier (150) et du second flux de réfrigérant réchauffé en premier (180) dans le premier compresseur (105) et consécutivement refroidissant le flux comprimé (110) du premier compresseur, (105) afin de fournir le premier flux de réfrigérant comprimé (120) ;
**caractérisé en ce que** le procédé comprend en outre :
le contrôle des étapes (a) à (e) en utilisant un contrôleur de processus avancé basé sur un contrôle prédictif de modèle afin de déterminer des actions de contrôle simultanées pour un ensemble de variables manipulées afin d'optimiser au moins l'un parmi un ensemble de paramètres à optimiser, tout en commandant au moins une variable parmi un ensemble de variables commandées, dans lequel l'ensemble de variables manipulées comprend :
- la composition du premier stock de réfrigérants mélangés dans le premier circuit de réfrigérant (100),
- le paramétrage du premier dispositif d'expansion (135), et
- le paramétrage du second dispositif d'expansion (165), dans lequel l'ensemble de variables commandées comprend :
- la température d'au moins un ou plusieurs seconds flux (60, 240),
- la différence de température entre le premier flux de réfrigérant réchauffé en premier (150) et au moins l'un parmi (i) le flux de réfrigérant comprimé en premier (120) et (ii) le premier flux (220),
- la différence de température entre le second flux de réfrigérant réchauffé en premier (180) et au moins l'un parmi (i) la seconde partie (130b) du premier flux de réfrigérant refroidi en premier (140) et (ii) un ou plusieurs seconds flux (50, 230) sous la forme du premier flux refroidi (230) et/ou du flux dépendant dérivé du premier flux refroidi,
- au moins l'une parmi (i) la différence de température entre le premier flux de réfrigérant refroidi en premier (130) et le premier flux de réfrigérant détendu en premier (140) et (ii) la différence de température entre le premier flux de réfrigérant davantage refroidi (160) et le second flux de réfrigérant détendu en premier (170), et
- l'énergie étant consommée par le premier compresseur (105) ;
et dans lequel l'ensemble de paramètres à optimiser comprend le taux de production du flux d'hydrocarbure refroidi et/ou l'efficacité de refroidissement du premier circuit de réfrigérant (100), ladite efficacité de refroidissement reflétant l'énergie consommée dans le premier compresseur (105) par rapport à la masse du flux d'hydrocarbure refroidi (60) produit dans le temps.

2. Procédé selon la revendication 1, dans lequel le premier réfrigérant mélangé comprend au moins du méthane, de l'éthane et du propane et dans lequel la manipulation de la composition du premier réfrigérant mélangé comprend la manipulation d'un ou de plusieurs parmi le stock composé de méthane, d'éthane et de propane du premier réfrigérant mélangé dans le premier circuit de réfrigérant.

3. Procédé selon l'une quelconque des revendications précédentes, dans lequel le premier flux comprend un flux d'alimentation d'hydrocarbure, dans lequel le premier flux refroidi comprend un flux d'alimentation d'hydrocarbure refroidi, et dans lequel les un ou plusieurs seconds flux comprennent le flux d'alimentation d'hydrocarbure refroidi ou le flux dépendant dérivé du premier flux refroidi.

4. Procédé selon la revendication 3, comprenant en outre, avant l'étape (c), la dérivation de l'hydrocarbure du premier flux refroidi en fractionnant le flux d'alimentation d'hydrocarbure refroidi dans une colonne de récupération de liquides de gaz naturel afin de fournir le flux d'hydrocarbure et un flux de résidu de liquide.

5. Procédé selon l'une quelconque des revendications précédentes, dans lequel le premier flux comprend un second flux de réfrigérant d'un second réfrigérant mélangé dans un second circuit de réfrigérant, dans lequel le premier flux refroidi comprend un second flux de réfrigérant refroidi, et dans lequel les un ou plusieurs seconds flux comprennent le second flux de réfrigérant refroidi ainsi que le flux d'hydrocarbure, et les un ou plusieurs seconds flux refroidis comprennent un second flux de réfrigérant davantage refroidi et le flux d'hydrocarbure refroidi.

6. Procédé selon l'une quelconque des revendications précédentes, dans lequel le refroidissement du premier flux comprend le refroidissement de deux premiers flux ou plus dans le même premier échangeur de chaleur ou chacun dans un premier échangeur de chaleur à haute pression différent.

7. Procédé selon l'une quelconque des revendications précédentes, dans lequel le refroidissement des un ou plusieurs seconds flux comprend le refroidissement de deux seconds flux ou plus dans le même second échangeur de chaleur ou chacun dans un second échangeur de chaleur à haute pression différent.

8. Procédé selon l'une quelconque des revendications précédentes, comprenant en outre l'étape suivante :
(h) la liquéfaction au moins partielle, de préférence totale, d'au moins une fraction du flux d'hydrocarbure refroidi dans un échangeur de chaleur principal.

9. Procédé selon la revendication 8, comprenant en outre l'étape suivante :
(f) la séparation du flux d'hydrocarbure refroidi dans un premier séparateur afin de fournir la fraction sous forme d'un flux de tête de colonne riche en méthane et d'un flux de fond de colonne appauvri en méthane ; et éventuellement
(g) la pressurisation du flux de fond de colonne appauvri en méthane afin de fournir un flux de fond de colonne appauvri en méthane (pressurisé) et le passage dudit flux de fond de colonne appauvri en méthane (pressurisé) vers une colonne de récupération de liquides de gaz naturel en tant que reflux.

10. Procédé selon les revendications 8 ou 9, dans lequel la liquéfaction au moins partielle, de préférence totale, de la fraction du flux d'hydrocarbure refroidi comprend l'échange de chaleur du flux riche en méthane avec un second réfrigérant afin de fournir un flux d'hydrocarbure refroidi liquéfié au moins partiellement, de préférence totalement.

11. Procédé selon les revendications 8 ou 9, dans lequel la liquéfaction au moins partielle, de préférence totale, de la fraction du flux d'hydrocarbure refroidi comprend l'échange de chaleur de la fraction avec une seconde partie du premier flux de réfrigérant davantage refroidi, afin de fournir un flux d'hydrocarbure liquéfié au moins partiellement, de préférence totalement.

12. Procédé selon l'une quelconque des revendications 8 à 11, comprenant en outre l'étape suivante :
(i) la réduction de la pression du flux liquéfié au moins partiellement, de préférence totalement afin de fournir un flux de produit d'hydrocarbure liquéfié et un flux de gaz flash.

13. Procédé selon l'une quelconque des revendications précédentes, dans lequel le flux d'hydrocarbure est un flux de gaz naturel.

14. Procédé selon l'une quelconque des revendications précédentes, dans lequel la composition de la première partie étant détendue dans l'étape (b) est sensiblement la même que la composition de l'au moins la partie du premier flux de réfrigérant davantage refroidi étant détendu dans l'étape (d).

15. Appareil pour la production d'un flux d'hydrocarbure refroidi (60) à partir d'un flux d'hydrocarbure, comprenant :
- un premier circuit de réfrigérant (100) comprenant un stock d'un premier réfrigérant mélangé; un premier dispositif d'expansion (135) ; un second dispositif d'expansion (165) ; un premier compresseur (105) et un ou plusieurs premiers refroidisseurs (115a, 115b, 115c) afin de refroidir un flux comprimé (110) à partir du premier compresseur permettant de fournir un premier flux de réfrigérant comprimé (120) ;
- un premier échangeur de chaleur (125) conçu pour refroidir un premier flux (220) et le premier flux de réfrigérant comprimé (120), contre un premier flux de réfrigérant détendu en premier (140) à un premier niveau de pression, afin de fournir un premier flux refroidi (230), un premier flux de réfrigérant refroidi en premier (130) et un premier flux de réfrigérant réchauffé en premier (150), le premier dispositif d'expansion (135) étant conçu pour recevoir une première partie (130a) d'un premier flux de réfrigérant refroidi en premier (130) et afin de fournir un premier flux de réfrigérant détendu en premier (140) ;
- un second échangeur de chaleur (145) conçu pour refroidir un ou plusieurs seconds flux (50, 230) et une seconde partie (130b) du premier flux de réfrigérant refroidi en premier contre un second flux de réfrigérant détendu en second (170) afin de fournir un ou plusieurs seconds flux (60, 240), un premier flux de réfrigérant davantage refroidi (160) et un second flux de réfrigérant réchauffé en premier (180), le second dispositif d'expansion (165) étant conçu pour recevoir au moins une première partie du premier flux de réfrigérant davantage refroidi (160) afin de fournir le second flux de réfrigérant détendu en premier (170), ledit second flux de réfrigérant détendu en premier (170) étant à une pression inférieure à celle dudit premier flux de réfrigérant détendu en premier (140), ledit ou lesdits seconds flux (50, 230) comprenant au moins le premier flux refroidi ou un flux dépendant dérivé de celui-ci, dans lequel le flux d'hydrocarbure (50) est compris dans le ou les seconds flux afin de fournir au moins le flux d'hydrocarbure refroidi (60) ;
- le premier compresseur (105) étant conçu pour compresser les fractions gazeuses (150', 180') du premier flux de réfrigérant réchauffé en premier (150) et du second flux de réfrigérant réchauffé en premier (180) ; **caractérisé en ce que** l'appareil comprend en outre :
- un dispositif de commande de processus avancé comprenant un code exécutable par ordinateur basé sur une commande prédictive de modèle afin de déterminer les actions de commande simultanées pour un ensemble de variables manipulées afin d'optimiser au moins l'un parmi un ensemble de paramètres à optimiser, tout en contrôlant au moins l'une parmi un ensemble de variables commandées d'un groupe, dans lequel l'ensemble de variables manipulées comprend :
- la composition du premier stock de réfrigérant mélangé dans le premier circuit de réfrigérant (100),
- le paramétrage du premier dispositif d'expansion (135), et
- le paramétrage du second dispositif d'expansion (165), dans lequel l'ensemble de variables commandées comprend :
- la température d'au moins un ou plusieurs seconds flux refroidis (60, 240),
- la différence de température entre le premier flux de réfrigérant réchauffé en premier (150) et au moins l'un parmi (i) le flux de réfrigérant comprimé en premier (120) et (ii) le premier flux (220),
- la différence de température entre le second flux de réfrigérant réchauffé en premier (180) et au moins l'un parmi (i) la seconde partie (130b) du premier flux de réfrigérant refroidi en premier (140) et (ii) un ou plusieurs seconds flux (50, 230) dans la forme du flux refroidi en premier (230) et/ou du flux dépendant dérivé du flux refroidi en premier,
- au moins l'une parmi (i) la différence de température entre le premier flux de réfrigérant refroidi en premier (130) et le premier flux de réfrigérant détendu en premier (140) et (ii) la différence de température entre le premier flux de réfrigérant davantage refroidi (160) et le deuxième flux de réfrigérant détendu en premier (170), et
- l'énergie étant consommée par le premier compresseur (105) ;
et dans lequel l'ensemble de paramètres à optimiser comprend le taux de production du flux d'hydrocarbure refroidi (60) et/ou l'efficacité de refroidissement du premier circuit de réfrigérant (100), ladite efficacité de refroidissement reflétant l'énergie consommée dans le premier compresseur (105) par rapport à la masse du flux d'hydrocarbure refroidi (60) produite dans le temps.
